# EUROPÄISCHE PATENTSCHRIFT

(11) **EP 2 762 764 B1**
(45) Veröffentlichungstag und Bekanntmachung des Hinweises auf die Patenterteilung: **31.10.2018**
(21) Anmeldenummer: 13006029.6
(22) Anmeldetag: 20.12.2013
(51) Int. Cl.: F21L 4/08, F21S 9/02, F21S 8/00, H02J 7/35, H02J 9/06, F21S 9/03, F21V 23/04, F21V 23/06, F21Y 101/00, F21Y 115/10, H02J 7/02

(54) **Wandbeleuchtungseinheit**
Wall illumination unit
Unité d'éclairage mural

(30) Priorität: 01.02.2013 DE 102013001741
(43) Veröffentlichungstag der Anmeldung: 06.08.2014
(73) Patentinhaber: ABB AG, 68309 Mannheim (DE)
(72) Erfinder: Treude, Hans Jörg, 58638 Iserlohn (DE)

(56) Entgegenhaltungen:
- US-A1- 2008 198 587
- US-A1- 2009 185 359

## Beschreibung

Die Erfindung betrifft eine Wandbeleuchtungseinheit, zur dekorativen Beleuchtung, umfassend
- ein Basismodul, welches dafür vorgesehen ist, in einer handelsüblichen Gerätedose installiert zu werden, wobei das Basismodul eine Anschlusseinheit für eine Netzleitung, einen Konverter und eine Steckvorrichtung aufweist, und
- ein Leuchtmodul, welches mindestens eine LED-Leuchte und eine Steckvorrichtungsaufnahme aufweist.

Wandbeleuchtungen zur dekorativen Beleuchtung von Wänden, Gemälden, Treppen oder zur Anzeige von Informationen sind bekannt (z.B. Busch-IceLight® oder Busch-StepLight®). Die bekannten Wandbeleuchtungen sind ortsfest an einer 230V-Netzleitung angeschlossen, wodurch diese nicht bei einem Ausfall der Stromversorgung benutzt werden können.

Aus der US 2009/185359 A1 und US 2008/198587 A1 sind Notbeleuchtungen bekannt, die während eines Stromausfalls automatisch eingeschaltet werden und deren Lichtquellen bei Stromausfall entnommen und wie eine Taschenlampe benutzt werden können.

Für die Beleuchtung im Falle eines Stromausfalls sind Taschenlampen mit wiederaufladbaren Batterien bekannt, welche zum Laden in eine handelsübliche Steckdose gesteckt werden. Im Falle eines Stromausfalls sind diese im Dunkeln oftmals schwer zu erkennen und nicht sofort zu finden. Nach abgeschlossenem Ladevorgang werden Taschenlampen zumeist aus der Steckdose entfernt und an einem beliebigen Platz aufbewahrt, wodurch sie sich auch im Hellen oftmals schwer finden lassen.

Der Erfindung liegt daher die Aufgabe zugrunde eine optimierte Wandbeleuchtungseinheit anzugeben.

Diese Aufgabe wird erfindungsgemäß gelöst durch eine Wandbeleuchtungseinheit zur dekorativen Beleuchtung gemäß Anspruch 1.

Im Abkehr zum Stand der Technik ist die erfindungsgemäße Wandbeleuchtungseinrichtung abnehmbar und schaltet sich im Falle eines Stromausfalls selbsttätig ein, wodurch diese leicht zu finden und als vollwertige Taschenlampe nutzbar ist.

Im eingesteckten Zustand lässt sich die erfindungsgemäße Wandbeleuchtungseinrichtung wie eine herkömmliche Wandbeleuchtungseinrichtung ansteuern und ist optisch nicht von dieser zu unterscheiden. Die hauptsächliche Funktion der Wandbeleuchtungseinrichtung besteht weiterhin darin, in eingestecktem Zustand eine Wand/Tapete mit stimmungsvollem Licht zu bestrahlen, ein Bild/Gemälde schön beleuchtet in Szene zu setzen oder in dunklen Gängen oder Treppenhäusern den Weg zu weisen.

Neben der hauptsächlichen Verwendung als dekorative Wandbeleuchtung ist die erfindungsgemäße Wandbeleuchtungseinrichtung auch für die autarke Beleuchtung im Falle eines Stromausfalls verwendbar. In eingestecktem Zustand ist das Leuchtmodul vorteilhafterweise immer an ein und demselben Basismodul eingesteckt, wodurch ein Wiederauffinden erleichtert und der elektrische Energiespeicher zumeist vollständig geladen ist. Insbesondere bei einem nächtlichen Stromausfall ist es von großem Vorteil, möglichst schnell eine funktionierende mobile Beleuchtung zur Verfügung zu haben, um zum Beispiel den Weg zum Sicherungskasten zu finden. Im Falle eines Stromausfalls schaltet die Aktivierungseinrichtung die LED-Leuchte des Leuchtmoduls automatisch ein, wodurch eine Mindesthelligkeit in dem Raum erreicht ist und die Aufmerksamkeit einer umstehenden Person auf die Wandbeleuchtungseinrichtung gelenkt wird.

Insgesamt ist daher eine Wandbeleuchtungseinrichtung zur dekorativen Beleuchtung gegeben, welche sich im Falle eines Stromausfalles zur mobilen Notbeleuchtung eignet und sich zusätzlich leicht finden lässt.

Entsprechend einer vorteilhaften Variante weist das Leuchtmodul zusätzlich eine Hinweiseinrichtung auf, welche zumindest mit der Aktivierungsvorrichtung elektrisch verbunden ist und im Falle eines Ausfalls der Stromversorgung durch die Netzleitung von der Aktivierungsvorrichtung aktivierbar ist, so dass eine in der Nähe befindliche Person darauf aufmerksam gemacht wird, dass das Leuchtmodul abnehmbar und autark als Taschenlampe benutzbar ist. Durch diese konkrete Ausgestaltung ist im Falle eines Stromausfalls auch eine Person, die nicht weiß dass es sich bei dieser Wandbeleuchtungseinrichtung um eine abnehmbare und autark betreibbare Taschenlampe handelt, in der Lage diese als solche zu erkennen.

Vorteilhaft weist die Hinweiseinrichtung des Leuchtmoduls eine optische Hinweiseinrichtung und/oder eine akustische Hinweiseinrichtung auf. Eine optische Hinweiseinrichtung ist beispielsweise ein Hinweisschild mit der Aufschrift "Taschenlampe", welches im Falle eines Stromausfalls aufleuchtet. Als akustische Hinweiseinrichtung ist beispielsweise ein Lautsprecher mit einer angeschlossenen Speichereinrichtung zu integrieren, welcher wiederholt das Wort "Taschenlampe" abspielt. Eine optische Hinweiseinrichtung lenkt ausschließlich die Aufmerksamkeit von Personen auf sich, welche sich in unmittelbarer Umgebung befinden. Die akustische Hinweiseinrichtung lenkt zusätzlich die Aufmerksamkeit von Personen auf sich, welche sich nicht im gleichen Raum befinden, oder ein optisches Hinweisschild nicht erkennen können.

Erfindungsgemäß weist das Leuchtmodul zusätzlich ein Lichtintensitätseinstellmittel auf, welches zumindest mit der LED-Leuchte elektrisch verbunden und so einstellbar ist, dass im Falle eines Ausfalls der Stromversorgung durch die Netzleitung die LED-Leuchte mit einer vordefinierten Lichtintensität leuchtet. Durch die Integration des Lichtintensitätseinstellmittels ist die Lichtintensität und damit indirekt die mögliche Nutzungsdauer als Taschenlampe vor Benutzung einstellbar. Die Lichtintensität lässt sich damit im Voraus so einstellen, dass diese ausreichend ist um im Falle eines Stromausfalls notwendige Reparaturarbeiten bequem erledigen zu können, ohne dass die Kapazität des elektrischen Energiespeichers vorzeitig erschöpft ist.

Bevorzugterweise ist der elektrische Energiespeicher der Wandbeleuchtungseinheit auswechselbar. Hierdurch lässt sich der elektrische Energiespeicher, welcher durch die wiederholten Ladezyklen einem Verschleiß unterliegt, nach einer gewissen Nutzungsdauer gegen einen neuen, nicht erschöpften, elektrischen Ladespeicher auswechseln.

Gemäß einer vorteilhaften Ausführungsform weist die Wandbeleuchtungseinheit eine Ladezustandsanzeigeeinrichtung zum Anzeigen des Ladezustandes des elektrischen Energiespeichers auf, welche zumindest mit dem elektrischen Energiespeicher elektrisch verbunden ist. Durch die, vorzugsweise digitale, Ladezustandsanzeigeeinrichtung lässt sich der Ladezustand des elektrischen Energiespeichers kontrollieren.

Bevorzugterweise weist die elektrische Verbindung der Steckvorrichtung mit der Steckvorrichtungsaufnahme eine induktive Verbindung und/oder eine galvanische Verbindung auf. Bei der induktiven Verbindung wird die Energie zwischen der Steckvorrichtung und der Steckvorrichtungsaufnahme durch transformatorische Kopplung übertragen, hierdurch ist kein Steckkontakt mehr nötig und der Kontaktverschleiß ist vorteilhafterweise vermieden. Eine galvanische Verbindung ist beispielsweise durch einen Steckkontakt zwischen Steckvorrichtung und Steckvorrichtungsaufnahme gebildet.

In einer weiter optimierten Wandbeleuchtungseinheit sind das Leuchtmodul und das Basismodul mit einer Verschlussvorrichtung verbunden, wobei diese im Falle eines Ausfalls der Stromversorgung durch die Netzleitung von der Regeleinrichtung öffenbar ansteuerbar ist. Die Regeleinrichtung öffnet nur im Falle eines Stromausfalls die Verschlussvorrichtung, wodurch sichergestellt ist, dass das Leuchtmodul ausschließlich in diesem Fall mobil benutzbar ist.

Gemäß einer vorteilhaften Ausführungsform ist die Wandbeleuchtungseinheit zumindest teilweise von einer öffenbaren und zumindest teilweise transparenten Abdeckvorrichtung abgedeckt. Die Abdeckvorrichtung kann beispielsweise die Schutzart IP44 erfüllen, wodurch die Wandbeleuchtungseinrichtung vorteilhaft vor dem Eindringen von Fremdkörpern >1mm und vor Spritzwasser geschützt ist. Die Abdeckvorrichtung lässt sich als Klappdeckel oder Tür ausführen, hinter welcher die Wandbeleuchtungseinheit positioniert ist.

Vorteilhaft weist die Wandbeleuchtungseinheit zusätzlich eine Solarenergie-Erzeugungseinrichtung zum Erzeugen von Energie aus Umgebungslicht auf, welche zumindest mit dem elektrischen Energiespeicher elektrisch leitend verbunden ist. Insbesondere im Außeneinsatz lässt sich das Leuchtmodul so zusätzlich mittels autark erzeugter Solarenergie versorgen. Eine Ausführungsform besteht darin, die Solarenergie-Erzeugungseinrichtung als Solarfolie auf die Abdeckvorrichtung aufzubringen.

In einer weiter vorteilhaften Variante ist die mindestens eine LED-Leuchte zusätzlich über eine Busverbindung ansteuerbar. Durch die Busankopplung (z.B. KNX) ist die LED-Leuchte manuell mittels einer zentralen Kontrolleinrichtung ansteuerbar. Eine Verbindung mit der Haus- und Gebäudesystemtechnik und weiteren Einrichtungen, z. B elektrischen Rollläden, lässt sich somit einrichten. Die Leuchtstärke der LED-Leuchte ist somit in Abstimmung mit weiteren Einrichtungen der Haustechnik ansteuerbar.

Gemäß einer vorteilhaften Ausgestaltung weist die Wandbeleuchtungseinheit einen Dämmerungssensor auf, welcher zumindest mit der Regeleinrichtung elektrisch leitend verbunden ist, wobei die Regeleinrichtung bei einem vordefinierten Dämmerungswert die LED-Leuchte ansteuert. Durch diese Ausgestaltung schaltet sich das Leuchtmodul in der Dämmerung automatisch ein, wodurch eine vordefinierte Lichtintensität erreicht ist.

Weitere vorteilhafte Ausgestaltungsmöglichkeiten sind den weiteren abhängigen Ansprüchen zu entnehmen. Anhand der in den Zeichnungen dargestellten Ausführungsbeispiele sollen die Erfindung, weitere Ausführungsformen und weitere Vorteile näher beschrieben werden.

In der Zeichnung zeigen
- Fig. 1: eine perspektivische Sicht auf eine exemplarische Wandbeleuchtungseinheit,
- Fig. 2: die exemplarische Wandbeleuchtungseinheit im Netzbetrieb,
- Fig. 3: eine exemplarische Verschaltung der Wandbeleuchtungseinheit,
- Fig. 4: eine exemplarische Frontseite eines Leuchtmoduls,
- Fig. 5: eine exemplarische Verschaltung eines Leuchtmoduls,
- Fig. 6: eine exemplarische mechanisch und elektrisch reversibel verbindbare Steckvorrichtung und
- Fig. 7: eine Wandbeleuchtungseinheit mit einer exemplarischen Abdeckvorrichtung.

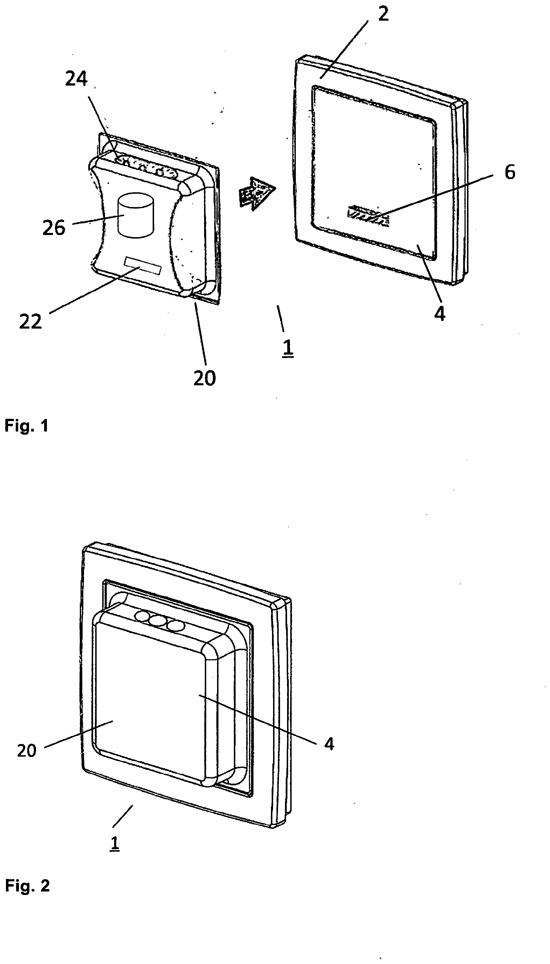

Fig. 1 zeigt eine Wandbeleuchtungseinheit 1, umfassend ein Leuchtmodul 20 und ein Basismodul 4. Das Basismodul 4 ist dafür vorgesehen, in einer handelsüblichen Gerätedose installiert zu werden, welche mit einem Abdeckrahmen 2 abgedeckt ist und es weist eine Steckvorrichtung 6 zum elektrischen und mechanischen Verbinden eines Leuchtmoduls 20 auf. Als Gegenstück weist das Leuchtmodul 20 eine Steckvorrichtungsaufnahme 22 auf, welche an die Steckvorrichtung 6 des Basismoduls 4 angepasst ist. Diese Steckverbindung verbindet das Leuchtmodul 20 elektrisch und mechanisch mit dem Basismodul 4. Die Verbindung ist ausreichend stabil ausgeführt um das Basismodul mechanisch zu halten, beispielsweise durch eine Verrastung oder eine Magnetverbindung.

Im Falle eines Stromausfalls schaltet die Wandbeleuchtungseinheit 1 unmittelbar um auf eine Stromversorgung durch den elektrischen Energiespeicher 26 wodurch die LED-Leuchte 24 angeschaltet wird. Die Wandbeleuchtungseinheit 1 schaltet somit auf einen Notstrommodus um. In diesem Fall hat ein Nutzer die Möglichkeit, das Leuchtmodul 20 vom Basismodul 4 zu trennen und dieses als mobile Taschenlampe zu nutzen. Nach mobiler Nutzung lässt sich das Leuchtmodul 20 durch Aufstecken wieder mit dem Basismodul 4 verbinden, womit das Leuchtmodul 20 wieder zur dekorativen Beleuchtung nutzbar ist und der elektrische Energiespeicher 26 für die nächste mobile Nutzung geladen wird. Ein Nutzer weiß daher, dass er mit der Wandbeleuchtungseinheit 1 eine aufgeladene Taschenlampe stets an der gleichen Stelle vorfindet.

In der dargestellten Figur sind an der Oberseite des Leuchtmoduls 20 drei LED-Leuchten 24 nebeneinander integriert, wodurch sich eine Wand dekorativ beleuchten lässt. Die mindestens eine LED-Leuchte 24 kann in Form einer separaten (Einzel-) LED, in Form mehrerer nebeneinander angeordneter (Einzel-) LEDs oder in Form sogenannter Multi-Chip-LEDs ausgebildet sein. Die LED-Leuchte 24 ist beispielsweise in Reflektoren und/ oder Spiegel eingefasst, wodurch ein gerichteter Lichtkegel erzeugt wird. Um im Falle der mobilen Nutzung Energie zu sparen, besteht eine Möglichkeit darin, die Aktivierungseinrichtung so zu konfigurieren das nicht sämtliche LED-Leuchten 24 angeschaltet werden.

Fig. 2 zeigt eine exemplarische Wandbeleuchtungseinheit 1 im Netzbetrieb, wobei das Leuchtmodul 20 auf das Basismodul 4 aufgesteckt ist. Das Leuchtmodul 20 ist so geformt, dass es ergonomisch als Taschenlampe benutzbar ist. Im aufgesteckten Zustand ist die Taschenlampen-Funktion des Leuchtmoduls 20 nicht als solche erkennbar, da sich das Leuchtmodul in das Design des Basismoduls 4 einfügt. Das Basismodul 4 fügt sich wiederum in die Gerätedose ein, welche in Unterputz-Montage in der Wand installiert und von dem Abdeckrahmen 2 abgedeckt ist. Es ist deutlich gezeigt, dass das Leuchtmodul 20 in eingesetztem Zustand nicht als Taschenlampe erkennbar ist, da sich das Leuchtmodul 20 formschön an das Basismodul 4 anlegt, wodurch die Wandbeleuchtungseinheit 1 als monolithischer Block erscheint.

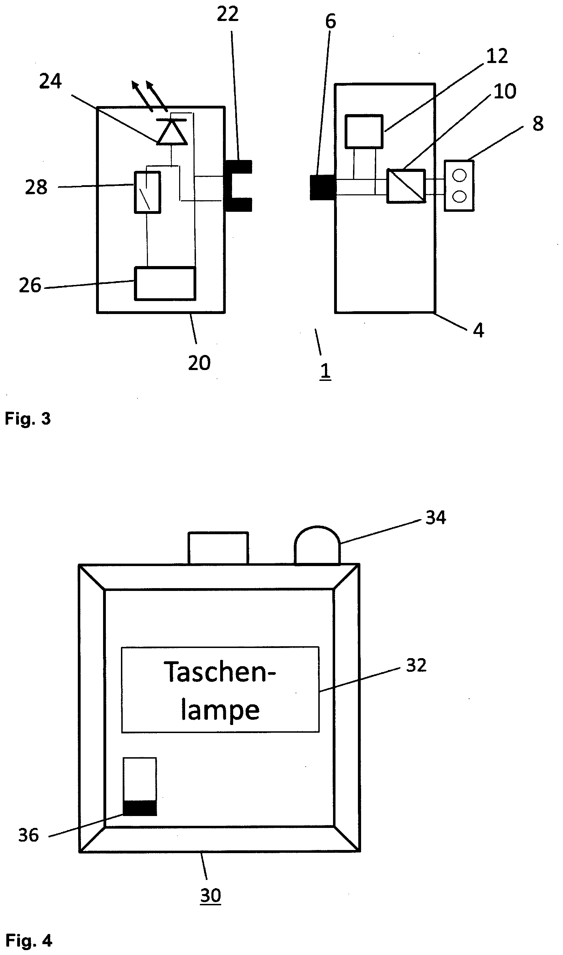

Fig. 3 zeigt eine Prinzipskizze zur elektrischen Verschaltung der Wandbeleuchtungseinheit 1. Das Basismodul 4 weist beispielhaft folgende Komponenten auf, welche untereinander elektrisch verbunden sind: die Steckvorrichtung 6, eine Anschlusseinheit 8, einen Konverter 10 und die Regeleinrichtung 12. Die Anschlusseinheit 8 ist mit einer 230V-Netzleitung verbunden und der leerlauf- und kurzschlussfeste Konverter 10 liefert einen Konstant-Gleichström, z.B. 350mA.

Das Leuchtmodul 20 weist beispielhaft folgende Komponenten auf, welche wiederum untereinander elektrisch verbunden sind: mindestens eine LED-Leuchte 24, eine Steckvorrichtungsaufnahme 22, eine Aktivierungseinrichtung 28 und einen elektrischen Energiespeicher 26. In eingestecktem Zustand wird der elektrische Energiespeicher 26 geladen, wobei der Ladezustand von der Regeleinrichtung 12 überwacht und geregelt wird. Die Aktivierungseinrichtung 28 ist so konfiguriert, dass diese im Falle eines Stromausfalls die Stromversorgung automatisch auf den elektrischen Energiespeicher 26 umschaltet und das Leuchtmodul damit autark als Taschenlampe benutzbar ist.

Die Regeleinrichtung 12 kann zusätzlich zur Vorgabe einer gewünschten Lichtintensität im Netzbetrieb und im Betrieb als Taschenlampe verwendet werden. Es lässt sich dadurch ein Feinabgleich der Lichtintensität durchführen, um z.B. bei mehreren benachbart angeordneten Wandbeleuchtungseinheiten 1 sicherzustellen, dass alle mit der gleichen Lichtintensität leuchten.

Die skizzierte Steckvorrichtung 6 bildet zusammen mit der Steckvorrichtungsaufnahme 22 die elektrische und mechanische Verbindung zwischen dem Basismodul 4 und dem Leuchtmodul 20.

Fig. 4 zeigt exemplarisch die Frontseite eines Leuchtmoduls. Die Frontseite weist eine optische Hinweiseinrichtung 32 und eine optionale Ladezustandsanzeigeeinrichtung 36 auf. Eine Ausführungsform besteht darin, die Ladezustandsanzeigeeinrichtung 36 intervallweise erscheinen zu lassen oder ausschließlich dann erscheinen zu lassen, wenn ein nicht dargestellter Taster betätigt wird. Dadurch hebt sich das Erscheinungsbild des mobilen Leuchtmoduls 30 nicht von dem anderer Wandbeleuchtungseinrichtungen ab.

Die optische Hinweiseinrichtung 32 erscheint ausschließlich im Falle eines Stromausfalls der 230V-Netzleitung und weist umstehende Personen darauf hin, dass das Leuchtmodul 30 abnehmbar und als Taschenlampe benutzbar ist. Eine akustische Hinweiseinrichtung 34 kann beispielsweise ein Lautsprecher sein, welcher im Falle eines Stromausfalls das Wort "Taschenlampe" in einem vordefinierten Takt aussendet, so dass auch Personen in anderen Räumen auf die zusätzliche Taschenlampenfunktion des Leuchtmoduls 30 aufmerksam gemacht werden.

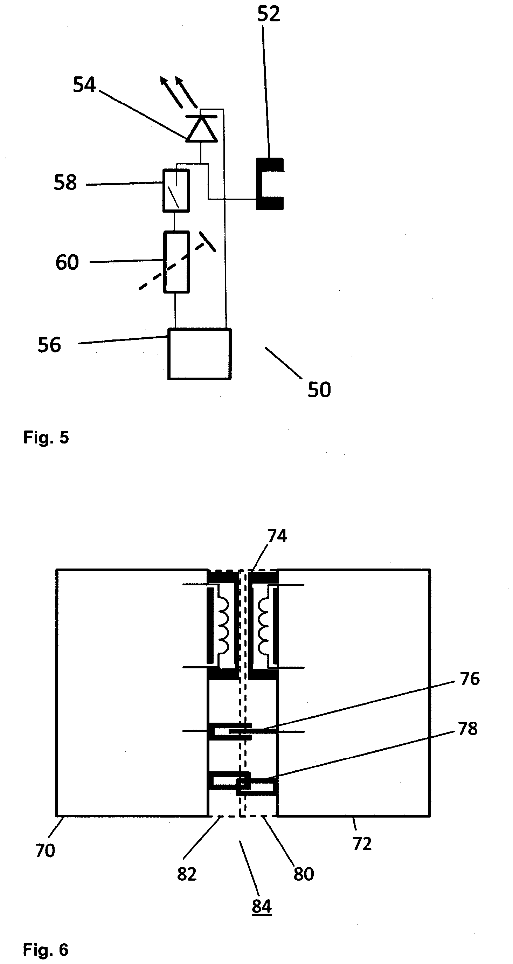

Fig. 5 zeigt eine exemplarische Verschaltung eines Leuchtmoduls 50 einer Wandbeleuchtungseinheit. Die Steckvorrichtungsaufnahme 52, die LED-Leuchte 54, die Aktivierungseinrichtung 58, ein Lichtintensitätseinstellmittel 60 und der elektrische Energiespeicher 56 sind elektrisch leitend miteinander verbunden. Die elektrische Verbindung ist so ausgeführt, dass
- der Ladezustand des elektrischen Energiespeichers 56 von der nicht dargestellten Regeleinrichtung überwacht werden kann,
- die Aktivierungseinrichtung 58 im Falle eines Ausfalls der Stromversorgung durch den Netzanschluss auf die Versorgung durch den elektrischen Energiespeicher umschaltet und
- das Lichtintensitätseinstellmittel 60 so verbunden ist, dass hierdurch die Lichtintensität der LED-Leuchte 54 im autarken Betrieb eingestellt werden kann.

Gemäß einer weiteren, nicht dargestellten, Ausführungsform kann das Lichtintensitätseinstellmittel 60 in Form eines von einem Bewegungsmelder (beispielsweise HF-Melder, PIR-Sensor) angesteuerten Schalters ausgebildet sein, d.h. sobald der Bewegungsmelder im Falle eines Stromausfalls eine Person detektiert, wird die volle Lichtintensität der LED-Leuchte 54 eingeschaltet. Sobald mittels des Bewegungsmelders keine Person mehr erfasst wird, wird im Falle eines Stromausfalls die verminderte Lichtintensität eingeschaltet wodurch beispielsweise ein Orientierungslicht mit verminderter Lichtintensität bewirkt ist.

Fig. 6 zeigt eine mechanisch und elektrisch reversibel verbindbare exemplarische Steckvorrichtung, welche das Leuchtmodul 70 an das Basismodul 72 anbindet. Deutlich zu sehen sind die elektrischen Kontakte der induktiven Verbindung 74, der galvanischen Verbindung 76 und der Verschlussvorrichtung 78 welche in das Leuchtmodul 70 und das Basismodul 72 weisen.

Die elektrische Verbindung zwischen Basismodul 72 und Leuchtmodul 70 kann beispielsweise durch eine induktive Verbindung 74 hergestellt werden. Vorteilhaft hat die induktive Verbindung 74 keinen metallischen Kontakt und unterliegt damit auch keinem korrosiven Verschleiß. Zusätzlich ist auch eine galvanische Verbindung 76 möglich, welche beispielsweise durch einen Steckkontakt zwischen Basismodul 72 und Leuchtmodul 70 gebildet ist.

Das Leuchtmodul 70 ist zusätzlich über eine Verschlussvorrichtung 78 an dem Basismodul 72 angeschlossen. Die Verschlussvorrichtung 78 kann ein elektrisches Schloss aufweisen, welches mit der nicht dargestellten Regeleinrichtung verbunden ist. Im Falle eines Stromausfalls lässt sich das elektrische Schloss von der Regeleinrichtung öffenbar ansteuern. Insbesondere im Betrieb in öffentlichen Einrichtungen ist dadurch ein "versehentliches" Mitnehmen des Leuchtmoduls 70 im Netzbetrieb ausgeschlossen.

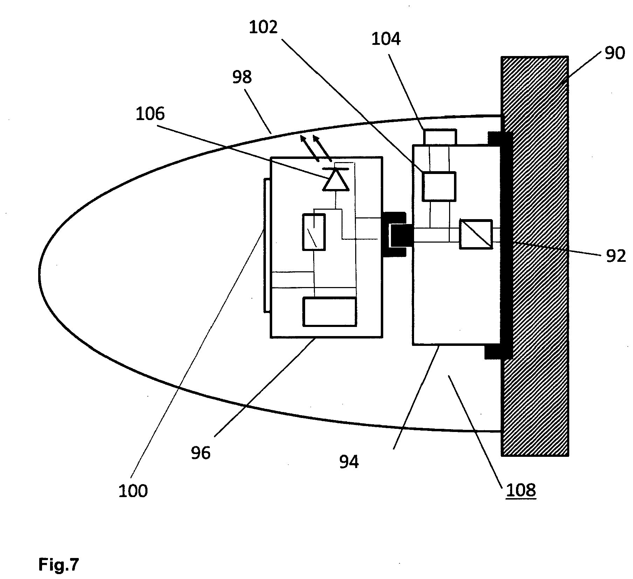

Fig. 7 zeigt eine Wandbeleuchtungseinheit mit einer exemplarischen Abdeckvorrichtung 98. Die Abdeckvorrichtung 98 kann vorgesehen sein, um die Wandbeleuchtungseinheit 108 vor Schmutz oder Spritzwasser zu schützen, beispielsweise IP44-mäßig. In der dargestellten Ausführungsform ist die Abdeckvorrichtung 98 direkt an einer Wand 90 befestigt, vollständig transparent und abnehmbar.

Auf der Stirnseite des Leuchtmoduls ist eine Solarenergie-Erzeugungseinrichtung 100 aufgebracht. Die Solarenergie-Erzeugungsvorrichtung 100 ist in dieser exemplarischen Ausführungsform eine Solarfolie, welche in das Gehäuse des Leuchtmoduls 96 integriert ist. Eine nicht dargestellte Ausführungsform besteht darin, entsprechende Solarfolien in das Gehäuse der Wandbeleuchtungseinheit oder die Abdeckvorrichtung zu hinterspritzen, auch eine Stromgewinnung mit handelsüblichen Solarplatten ist realisierbar. Die durch die Solarenergie-Erzeugungsvorrichtung 100 erzeugte Energie kann beispielsweise für die Aufladung des elektrischen Energiespeichers verwendet werden.

Auf der Oberseite des Basismoduls 94 ist ein Dämmerungssensor 104 aufgebracht, welcher mit der Regeleinrichtung 102 elektrisch verbunden ist. Der Dämmerungssensor 104 misst die lokale Lichtintensität der Umgebung und leitet diesen Messwert an die Regeleinrichtung weiter. Die Regeleinrichtung 102 ist beispielsweise so konfiguriert, dass diese die LED-Leuchte 106 für einen vordefinierten Dämmerungswert ansteuert.

Es sei angemerkt, dass der Begriff "umfassen" weitere Einrichtungen oder Verfahrensschritte nicht ausschließt, ebenso wie der Begriff "ein" und "eine" mehrere Einrichtungen und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### Bezugszeichenliste

- 1: Wandbeleuchtungseinheit
- 2: Abdeckrahmen
- 4: Basismodul
- 6: Steckvorrichtung
- 8: Anschlusseinheit
- 10: Konverter (Netzteil)
- 12: Regeleinrichtung
- 20: Leuchtmodul
- 22: Steckvorrichtungsaufnahme
- 24: LED-Leuchte
- 26: Elektrischer Energiespeicher
- 28: Aktivierungseinrichtung

- 30: Leuchtmodul
- 32: Optische Hinweiseinrichtung
- 34: Akkustische Hinweiseinrichtung
- 36: Ladezustandsanzeigeeinrichtung
- 38: LED-Leuchte

- 50: Verschaltung eines Leuchtmoduls
- 52: Steckvorrichtungsaufnahme
- 54: LED-Leuchte
- 56: Elektrischer Energiespeicher
- 58: Aktivierungseinrichtung
- 60: Lichtintensitätseinstellmittel

- 70: Leuchtmodul
- 72: Basismodul
- 74: Induktive Verbindung
- 76: Galvanische Verbindung
- 78: Verschlussvorrichtung
- 80: Steckvorrichtung
- 82: Steckvorrichtungsaufnahme
- 84: Wandbeleuchtungseinheit

- 90: Wand
- 92: Gerätedose
- 94: Basismodul
- 96: Leuchtmodul
- 98: Abdeckvorrichtung
- 100: Solarenergie-Erzeugungsvorrichtung
- 102: Regeleinrichtung
- 104: Dämmerungssensor
- 106: LED-Leuchte
- 108: Wandbeleuchtungseinheit

## Patentansprüche

1. Wandbeleuchtungseinheit (1), zur dekorativen Beleuchtung, umfassend
- ein Basismodul (4, 72, 94), welches dafür vorgesehen ist, in einer handelsüblichen Gerätedose installiert zu werden, welche mit einem Abdeckrahmen (2) abgedeckt ist, wobei das Basismodul (4, 72, 94) eine Anschlusseinheit (8) für eine Netzleitung, einen Konverter (10), eine Regeleinrichtung (12) und eine Steckvorrichtung (6, 80) aufweist, und
- ein Leuchtmodul (20, 30, 70, 96), welches mindestens eine LED-Leuchte (24, 38, 54, 106) für eine dekorative Wandbeleuchtung, eine Steckvorrichtungsaufnahme (22, 52, 82), einen elektrischen Energiespeicher (26, 56) und eine Aktivierungseinrichtung (28, 58) aufweist,
a) wobei die Steckvorrichtung (6, 80) und die Steckvorrichtungsaufnahme (22, 52, 82) mechanisch und elektrisch reversibel miteinander verbindbar sind, so dass in verbundenem Zustand das Leuchtmodul (20, 30, 70, 96) von dem Basismodul (4, 72, 94) mechanisch gehalten ist,
b) wobei die LED-Leuchte (24, 38, 54, 106) von der Netzleitung über die Anschlusseinheit (8) ansteuerbar ist,
c) wobei die Regeleinrichtung (12) den Ladezustand des elektrischen Energiespeichers (26, 56) überwacht,
d) wobei das Leuchtmodul (20, 30, 70, 96) von dem Basismodul (4, 72, 94) abnehmbar ausgebildet und autark als Taschenlampe benutzbar ist,
e) wobei das Leuchtmodul (20, 30, 70, 96) ein Lichtintensitätseinstellmittel (60) aufweist, welches zumindest mit der LED-Leuchte (24, 38, 54, 106) elektrisch verbunden und so einstellbar ist, dass im Falle eines Ausfalls der Stromversorgung durch die Netzleitung die LED-Leuchte (24, 38, 54, 106) mit einer vordefinierten Lichtintensität leuchtet, und
f) wobei die Aktivierungseinrichtung (28, 58) so konfiguriert ist, dass sich diese im Falle eines Ausfalls der Stromversorgung durch die Netzleitung so aktiviert, dass die LED-Leuchte (24, 38, 54, 106) leuchtet, wobei der elektrische Energiespeicher (26, 56) die LED-Leuchte (24, 38, 54, 106) mit Energie versorgt.

2. Wandbeleuchtungseinheit (1, 84, 108) nach Anspruch 1, **dadurch gekennzeichnet, dass** das Leuchtmodul (20, 30, 70, 96) zusätzlich eine Hinweiseinrichtung (32, 34) aufweist, welche zumindest mit der Aktivierungsvorrichtung (28, 58) elektrisch verbunden ist und im Falle eines Ausfalls der Netzstromversorgung durch diese aktivierbar ist, so dass eine in der Nähe befindliche Person darauf aufmerksam gemacht wird, dass das Leuchtmodul (20, 30, 70, 96) abnehmbar und autark als Taschenlampe benutzbar ist.

3. Wandbeleuchtungseinheit (1, 84, 108) nach Anspruch 2, **dadurch gekennzeichnet, dass** die Hinweiseinrichtung (32, 34) des Leuchtmoduls (20, 30, 70, 96) eine optische Hinweiseinrichtung (32) und/oder eine akustische Hinweiseinrichtung (34) aufweist.

4. Wandbeleuchtungseinheit (1, 84, 108) nach einem der vorhergehenden Ansprüche, **dadurch gekennzeichnet, dass** der elektrische Energiespeicher (26, 56) auswechselbar ist.

5. Wandbeleuchtungseinheit (1, 84, 108) nach einem der vorhergehenden Ansprüche, **dadurch gekennzeichnet, dass** diese eine Ladezustandsanzeigeeinrichtung (36) zum Anzeigen des Ladezustandes des elektrischen Energiespeichers (26, 56) aufweist, welche zumindest mit dem elektrischen Energiespeicher (26, 56) elektrisch verbunden ist.

6. Wandbeleuchtungseinheit (1, 84, 108) nach einem der vorhergehenden Ansprüche, **dadurch gekennzeichnet, dass** die elektrische Verbindung der Steckvorrichtung (6, 80) mit der Steckvorrichtungsaufnahme (22, 52, 82) eine induktive Verbindung (74) und/oder eine galvanische Verbindung (76) aufweist.

7. Wandbeleuchtungseinheit (1, 84, 108) nach einem der vorhergehenden Ansprüche, **dadurch gekennzeichnet, dass** das Leuchtmodul (20, 30, 70, 96) und das Basismodul (4, 72, 94) mit einer Verschlussvorrichtung (78) verbunden sind, wobei diese im Falle eines Ausfalls der Stromversorgung durch die Netzleitung von der Regeleinrichtung (12) öffenbar ansteuerbar ist.

8. Wandbeleuchtungseinheit (1, 84, 108) nach einem der vorhergehenden Ansprüche, **dadurch gekennzeichnet, dass** diese zumindest teilweise von einer öffenbaren und zumindest teilweise transparenten Abdeckvorrichtung (98) abgedeckt ist.

9. Wandbeleuchtungseinheit (1, 84, 108) nach einem der vorhergehenden Ansprüche, **dadurch gekennzeichnet, dass** diese zusätzlich eine Solarenergie-Erzeugungseinrichtung (100) zum Erzeugen von Energie aus Umgebungslicht aufweist, welche zumindest mit dem elektrischen Energiespeicher (24, 56) elektrisch leitend verbunden ist.

10. Wandbeleuchtungseinheit (1, 84, 108) nach einem der vorhergehenden Ansprüche, **dadurch gekennzeichnet, dass** die mindestens eine LED-Leuchte (24, 38, 54, 106) zusätzlich über eine Busverbindung ansteuerbar ist.

11. Wandbeleuchtungseinheit (1, 84, 108) nach einem der vorhergehenden Ansprüche, **dadurch gekennzeichnet, dass** diese einen Dämmerungssensor (104) aufweist welcher zumindest mit der Regeleinrichtung (12, 102) elektrisch leitend verbunden ist, wobei die Regeleinrichtung (12, 102) bei einem vordefinierten Dämmerungswert die LED-Leuchte (24, 38, 54, 106) ansteuert.

## Claims

1. Wall illumination unit (1) for decorative illumination, comprising
- a base module (4, 72, 94) which is intended to be installed in a commercially available device receptacle which is covered by a covering frame (2), wherein the base module (4, 72, 94) has a connection unit (8) for a mains line, a converter (10), a control device (12) and a plug-in apparatus (6, 80), and
- a lighting module (20, 30, 70, 96) which has at least one LED luminaire (24, 38, 54, 106) for a decorative wall illumination, a plug-in apparatus receptacle (22, 52, 82), an electrical energy store (26, 56) and an activation device (28, 58),
a) wherein the plug-in apparatus (6, 80) and the plug-in apparatus receptacle (22, 52, 82) can be mechanically and electrically reversibly connected to one another, so that the lighting module (20, 30, 70, 96) is mechanically held by the base module (4, 72, 94) in the connected state,
b) wherein the LED luminaire (24, 38, 54, 106) can be actuated by the mains line by means of the connection unit (8),
c) wherein the control device (12) monitors the state of charge of the electrical energy store (26, 56),
d) wherein the lighting module (20, 30, 70, 96) is designed such that it can be removed from the base module (4, 72, 94) and can be used autonomously as a torch,
e) wherein the lighting module (20, 30, 70, 96) has a light intensity adjusting means (60) which is electrically connected at least to the LED luminaire (24, 38, 54, 106) and can be adjusted such that, in the event of a cut in the power supply by the mains line, the LED luminaire (24, 38, 54, 106) lights up with a predefined light intensity, and
f) wherein the activation device (28, 58) is configured such that, in the event of a cut in the power supply by the mains line, it is activated such that the LED luminaire (24, 38, 54, 106) lights up, wherein the electrical energy store (26, 56) supplies energy to the LED luminaire (24, 38, 54, 106).

2. Wall illumination unit (1, 84, 108) according to Claim 1, **characterized in that** the lighting module (20, 30, 70, 96) additionally has a notification device (32, 34) which is electrically connected at least to the activation apparatus (28, 58) and, in the event of a cut in the mains power supply, can be activated by the said activation apparatus, so that a person in the vicinity is made aware that the lighting module (20, 30, 70, 96) can be removed and can be used autonomously as a torch.

3. Wall illumination unit (1, 84, 108) according to Claim 2, **characterized in that** the notification device (32, 34) of the lighting module (20, 30, 70, 96) has an optical notification device (32) and/or an acoustic notification device (34).

4. Wall illumination unit (1, 84, 108) according to one of the preceding claims, **characterized in that** the electrical energy store (26, 56) is replaceable.

5. Wall illumination unit (1, 84, 108) according to one of the preceding claims, **characterized in that** it has a state of charge indicator device (36) for indicating the state of charge of the electrical energy store (26, 56), which state of charge indicator device is electrically connected at least to the electrical energy store (26, 56) .

6. Wall illumination unit (1, 84, 108) according to one of the preceding claims, **characterized in that** the electrical connection of the plug-in apparatus (6, 80) to the plug-in apparatus receptacle (22, 52, 82) has an inductive connection (74) and/or a galvanic connection (76) .

7. Wall illumination unit (1, 84, 108) according to one of the preceding claims, **characterized in that** the lighting module (20, 30, 70, 96) and the base module (4, 72, 94) are connected to a closure apparatus (78), wherein, in the event of a cut in the power supply by the mains line, the said closure apparatus can be actuated by the control device (12) such that it can be opened.

8. Wall illumination unit (1, 84, 108) according to one of the preceding claims, **characterized in that** it is covered at least partially by an openable and at least partially transparent covering apparatus (98).

9. Wall illumination unit (1, 84, 108) according to one of the preceding claims, **characterized in that** it additionally has a solar energy generating device (100) for generating energy from ambient light, which solar energy generating device is electrically conductively connected at least to the electrical energy store (24, 56) .

10. Wall illumination unit (1, 84, 108) according to one of the preceding claims, **characterized in that** the at least one LED luminaire (24, 38, 54, 106) can additionally be actuated by means of a bus connection.

11. Wall illumination unit (1, 84, 108) according to one of the preceding claims, **characterized in that** it has a dusk sensor (104) which is electrically conductively connected at least to the control device (12, 102), wherein the control device (12, 102) actuates the LED luminaire (24, 38, 54, 106) at a predefined low-level light value.

## Revendications

1. Unité d'éclairage mural (1) pour un éclairage décoratif, comprenant
- un module de base (4, 72, 94) prévu pour être installé dans un coffret d'appareil disponible dans le commerce, recouvert d'un bâti de recouvrement (2), dans laquelle le module de base (4, 72, 94) comporte une unité de connexion (8) destinée à une ligne secteur, un convertisseur (10), un dispositif de régulation (12) et un dispositif enfichable (6, 80), et
- un module d'éclairage (20, 30, 70, 96) qui comporte au moins une lumière LED (24, 38, 54, 106) pour un éclairage mural décoratif, un réceptacle de dispositif enfichable (22, 52, 82), un accumulateur d'énergie électrique (26, 56) et un dispositif d'activation (28, 58),
a) dans laquelle le dispositif enfichable (6, 80) et le réceptacle de dispositif enfichable (22, 52, 82) peuvent être reliés mécaniquement et électriquement l'un à l'autre de manière réversible afin que le module d'éclairage (20, 30, 70, 96) soit maintenu mécaniquement dans l'état connecté par le module de base (4, 72, 94),
b) dans laquelle la lumière LED (24, 38, 54, 106) peut être commandée à partir de la ligne secteur par l'unité de connexion (8),
c) dans laquelle le dispositif de commande (12) surveille l'état de charge de l'accumulateur d'énergie électrique (26, 56),
d) dans laquelle le module d'éclairage (20, 30, 70, 96) peut être démonté du module de base (4, 72, 94) et peut être utilisé de manière autonome en tant que lampe de poche,
e) dans laquelle le module d'éclairage (20, 30, 70, 96) comporte un moyen de réglage d'intensité lumineuse (60) qui est relié électriquement au moins à la lumière LED (24, 38, 54, 106) et est réglable de manière à ce qu'en cas de panne de l'alimentation en courant par la ligne secteur, la lumière LED (24, 38, 54, 106) soit allumée avec une intensité lumineuse prédéfinie, et
f) dans laquelle le dispositif d'activation (28, 58) est configuré pour s'activer en cas de panne de l'alimentation en courant par la ligne secteur de manière à ce que la lampe LED (24, 38, 54, 106) soit allumée, dans laquelle l'accumulateur d'énergie électrique (26, 56) alimente la lampe LED (24, 38, 54, 106) en énergie.

2. Unité d'éclairage mural (1, 84, 108) selon la revendication 1, **caractérisée en ce que** le module d'éclairage (20, 30, 70, 96) comporte en outre un dispositif indicateur (32, 34) qui est relié électriquement au moins au dispositif d'activation (28, 58) et peut être activé par celui-ci en cas de panne de l'alimentation en courant secteur, de manière à ce qu'une personne se trouvant dans le voisinage soit informée du fait que le module d'éclairage (20, 30, 70, 96) peut être utilisé de manière amovible et autonome en tant que lampe de poche.

3. Unité d'éclairage mural (1, 84, 108) selon la revendication 2, **caractérisée en ce que** le dispositif d'indication (32, 34) du module d'éclairage (20, 30, 70, 96) comporte un dispositif d'indication optique (32) et/ou un dispositif d'indication acoustique (34).

4. Unité d'éclairage mural (1, 84, 108) selon l'une des revendications précédentes, **caractérisée en ce que** l'accumulateur d'énergie électrique (26, 56) est remplaçable.

5. Unité d'éclairage mural (1, 84, 108) selon l'une des revendications précédentes, **caractérisée en ce qu'**elle comporte un indicateur d'état de charge (36) pour indiquer l'état de charge de l'accumulateur d'énergie électrique (26, 56), qui est relié électriquement au moins à l'accumulateur d'énergie électrique (26, 56).

6. Unité d'éclairage mural (1, 84, 108) selon l'une des revendications précédentes, **caractérisée en ce que** la liaison électrique du dispositif enfichable (6, 80) au réceptacle de dispositif enfichable (22, 52, 82) comporte une liaison par induction (74) et/ou une liaison galvanique (76).

7. Unité d'éclairage mural (1, 84, 108) selon l'une des revendications précédentes, **caractérisée en ce que** le module d'éclairage (20, 30, 70, 96) et le module de base (4, 72, 94) sont reliés à un dispositif de fermeture (78), qui peut être ouvert par le dispositif de commande (12) en cas de panne d'alimentation en courant par la ligne secteur.

8. Unité d'éclairage mural (1, 84, 108) selon l'une des revendications précédentes, **caractérisée en ce qu'**elle est recouverte au moins partiellement par un dispositif de recouvrement (98) pouvant être ouvert et au moins partiellement transparent.

9. Unité d'éclairage mural (1, 84, 108) selon l'une des revendications précédentes, **caractérisée en ce qu'**elle comprend en outre un dispositif de production d'énergie solaire (100) pour produire de l'énergie à partir de la lumière ambiante, qui est relié de manière électriquement conductrice à au moins l'accumulateur d'énergie électrique (24, 56).

10. Unité d'éclairage mural (1, 84, 108) selon l'une des revendications précédentes, **caractérisée en ce que** l'au moins une lumière LED (24, 38, 54, 106) peut en outre être commandée par l'intermédiaire d'une liaison par bus.

11. Unité d'éclairage mural (1, 84, 108) selon l'une des revendications précédentes, **caractérisée en ce qu'**elle comporte un capteur crépusculaire (104) qui est relié de manière électriquement conductrice au moins au dispositif de commande (12, 102), dans laquelle le dispositif de commande (12, 102) commande la lumière LED (24, 38, 54, 106) à une valeur crépusculaire prédéfinie.
